# EUROPEAN PATENT SPECIFICATION

(11) **EP 2 628 695 B1**
(45) Date of publication and mention of the grant of the patent: **08.10.2014**
(21) Application number: 13155300.0
(22) Date of filing: 14.02.2013
(51) Int. Cl.: B65G 57/06, B65G 57/24, B65G 61/00

(54) **Device and method of stacking layers of packs**
Vorrichtung und Verfahren zum Stapeln von Paketschichten
Dispositif et procédé d'empilage de couches de paquets

(30) Priority: 17.02.2012 IT PR20120007
(43) Date of publication of application: 21.08.2013
(73) Proprietor: Gea Procomac S.p.A., 43038 Sala Baganza (PR) (IT)
(72) Inventor: Bolzani, Dante, 43029 TRAVERSETOLO (PR) (IT)
(74) Representative: Gotra, Stefano

(56) References cited:
- EP-A1- 1 437 314
- EP-A1- 1 908 711
- EP-A1- 2 508 452
- WO-A1-2010/047595
- AU-A1- 2008 255 183
- DE-A1- 4 203 118
- DE-A1- 4 412 830
- DE-A1- 10 356 563
- DE-A1-102009 058 785
- US-A1- 2006 269 389

## Description

The invention relates to a device and a method for stacking layers of packs. In particular, the device and the method are usable in palletising apparatus.

As is known, to simplify transport operations, individually-packed products are successively grouped and packed in packs having easily-manoeuvrable shapes that are also such as to optimize occupation of space. A classic example of "primary" and "secondary" packing can be observed in the dispensing of drinks, which are first packed in bottles (or cans) and then packed in packs comprising a predetermined number of bottles (or cans).

In palletising systems of known type, the packs are subjected to various operations, such as selection, partitioning, positioning and/or orientation in predetermined layouts, grouped in layers. The thus-obtained layers are lastly piled on benches or pallets.

The lifting of the layers for enabling stacking on pallets is done, for example, by means of a pickup head comprising two arms in a "roller-shutter" arrangement, i.e. comprising a series of modular elements flanked and slidable along guides. The two arms are arranged symmetrically and in a first configuration they are in contact with one another such as to define a cradle destined to receive a layer of packs, while in a second configuration they are distanced from one another such as to enable a fall by force of gravity of the layer of packs.

This solution comprises the use of a horizontal introducer which, when the two arms are in the first configuration, positions the layer of packs internally of the cradle. The arms assume a "passive" attitude with respect to the layer: they are limited to awaiting the arrival thereof. This situation is shown, for example, in document US2006/269389.

In order to deposit the layer of packs on the first and the second arm, the introducer enters the cradle and is then extracted.

The pickup head must therefore await the complete extraction of the introducer before it can move. This waiting time has a negative impact on the overall productivity of the line, as it constitutes downtime.

Document AU 2008 255183 A1 discloses a method of stacking layers of packs according to the preamble of claim 1 and a device for stacking layers of packs according to the preamble of claim 6.

In this context, the technical task underpinning the present invention is to provide a method and a device for stacking layers of packs on a bench, which obviate the drawbacks of the prior art cited above.

In particular, an aim of the present invention is to disclose a device and a method for stacking layers of packs on a bench, which device and method provide an improved productivity with respect to the prior-art solutions and as such enable an improvement in overall productivity of the line.

Further, an aim of the present invention is to disclose a device and a method for stacking layers of packs on a bench which are constructionally simple, economical and require only a modest space.

The set technical task and the specified aims are substantially attained by a device and a method for stacking layers of packs on a bench, comprising the technical characteristics as set out in claim 1 and claim 6.

Further characteristics and advantages of the present invention will more fully emerge from the dependent claims and the non-limiting description that follows of a preferred but not exclusive embodiment of a device and a method for stacking layers of packs on a bench, as illustrated in the accompanying drawings, in which:
- figures 1-10 illustrate a succession of steps according to the present invention;
- figure 4a is a larger-scale view of figure 4;
- figure 11 is a perpendicular view to that of figures 1-10;
- figure 12 is a plan view of the device implementing the method of the present invention.

The object of the present invention is a method for stacking layers of packs by means of a pickup head 2.

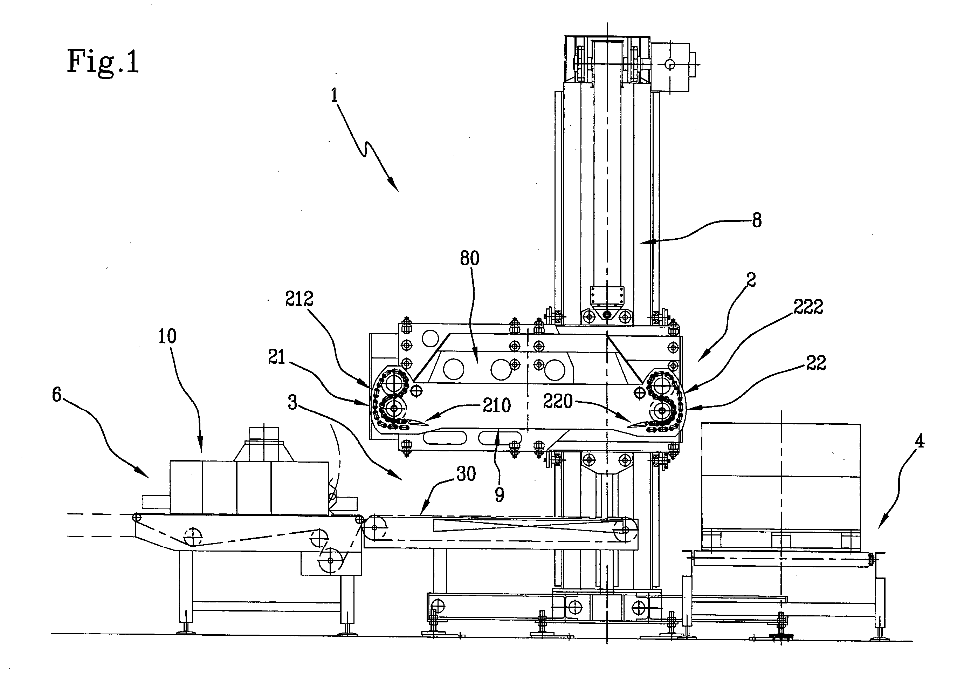

The method advantageously includes a step of position a predetermined layer 10 in a compacting station 6 (see for example figure 1).

In the compacting station 6 the packs of a layer are blocked to one another. This is obtained by means of a plurality of pushers which act on all the sides of the predetermined layer 10 of packs. In particular the pushers act on four sides of the predetermined layer 10.

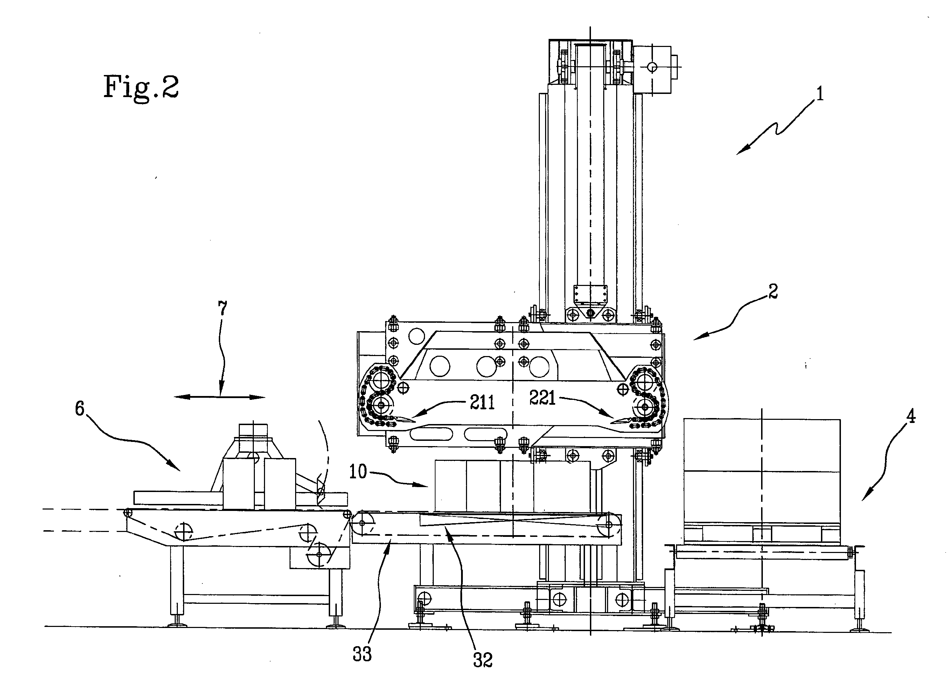

The method comprises a step of positioning the predetermined layer 10 of packs in a pickup station 3 (see figure 2).

The step of positioning the predetermined layer 10 of packs in the pickup station 3 follows the step of positioning the predetermined layer 10 in a compacting station 6. The compacting station 6 is upstream of the pickup station 3. In fact, after the step of compacting the packs, the method comprises advancing the packs towards the pickup station 3, for example by means of an advancing on a belt (integral with the compacting station 6).

The step of positioning the predetermined layer 10 in the pickup station 3 comprises the substep of moving the predetermined layer 10 along an imaginary feed plane 30 identified by motorized feeding means 33 fashioned in the pickup station 3; the predetermined layer 10 displaces along the feed plane 30 and positions the predetermined layer 10 axially with the pickup head 2 (which in the meantime is paused in an out-of-line position - see figure 2). Typically the motorized feeding means 33 comprise rotating means, for example one or more conveyor belts or a plurality of flanked rollers (in the preferred embodiment illustrated in the accompanying figures the feeding means 33 comprise a plurality of flanked conveyor belts - not consecutive; the entirety of the flanked belts identifies the feed plane 30).

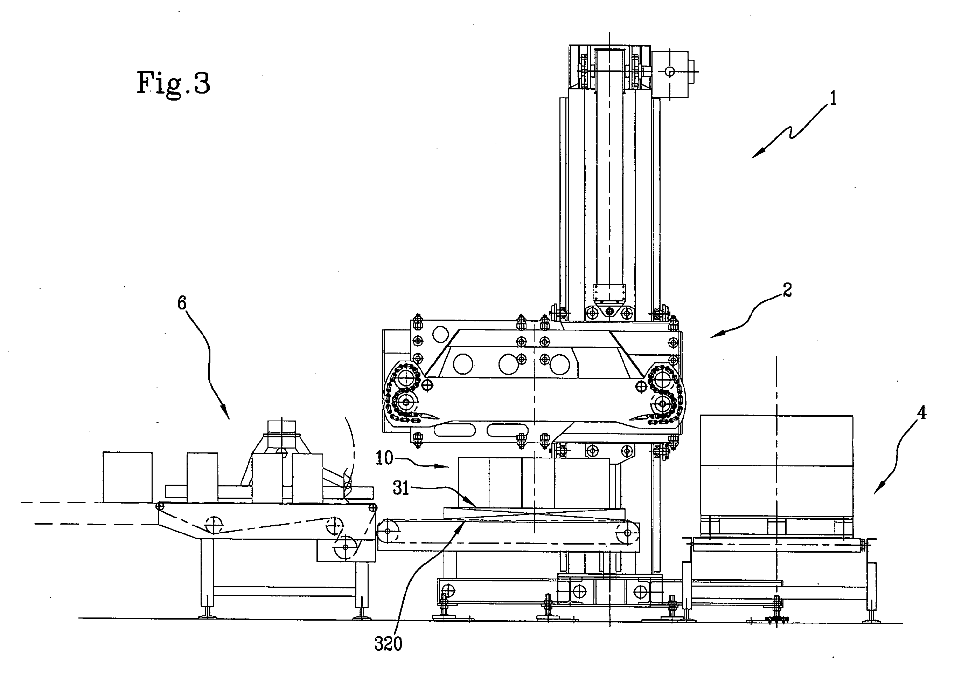

The step of positioning the predetermined layer 10 in the pickup station 3 comprises a substep of positioning the feed plane 30 below an imaginary supporting plane 31 defined by supporting means 32 and afforded in the pickup station 3. This determines transfer of the predetermined layer 10 from the feeding means 33 to the supporting means 32 (see figure 3); the step of positioning the feed plane 30 below a supporting plane 31 comprises a step of lowering the feeding means 33 and/or a step of raising the supporting means 32. In this way, at least a groove is generated below the predetermined layer 10 of packs, in which groove a part of the pickup head 2 can be inserted.

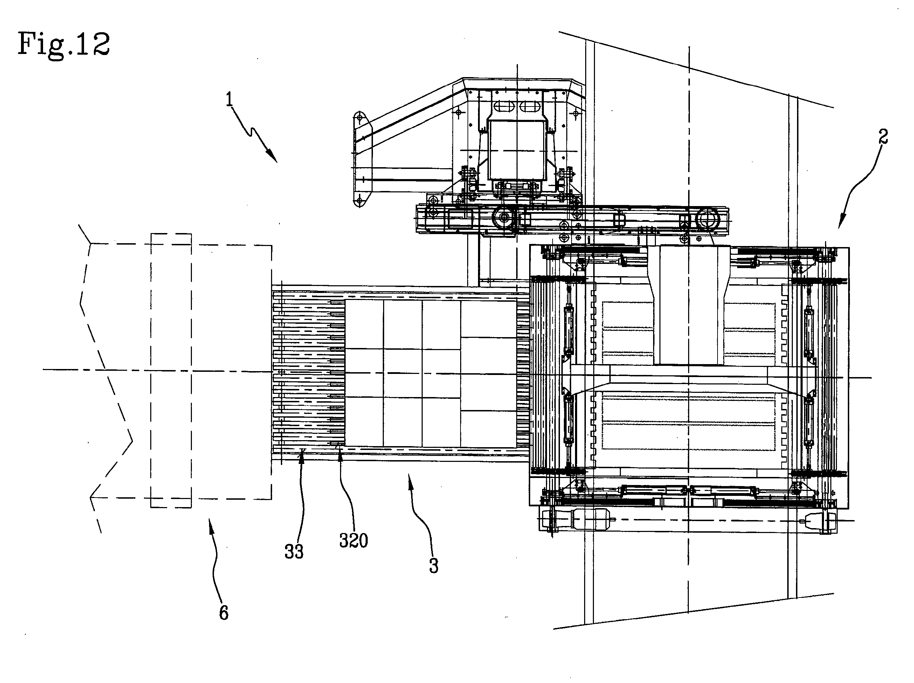

The supporting means 32 advantageously comprise a plurality of flanked cross-ties 320 (see figure 12). The cross-ties 320 are advantageously distanced from one another. The cross-ties 320 are preferably fixed. The feeding means 33 are advantageously interposable between the cross-ties 320. The combination of the upper surfaces of the cross-ties 320 defines the support plane 31. By lowering the feeding means 33 the means 33 disappear under the cross-ties 320 and deposit the first layer 10 on the cross-ties 320.

The method further comprises at least partly inserting a first and a second arm 21, 22 of the pickup head 2 immediately below the predetermined layer 10.

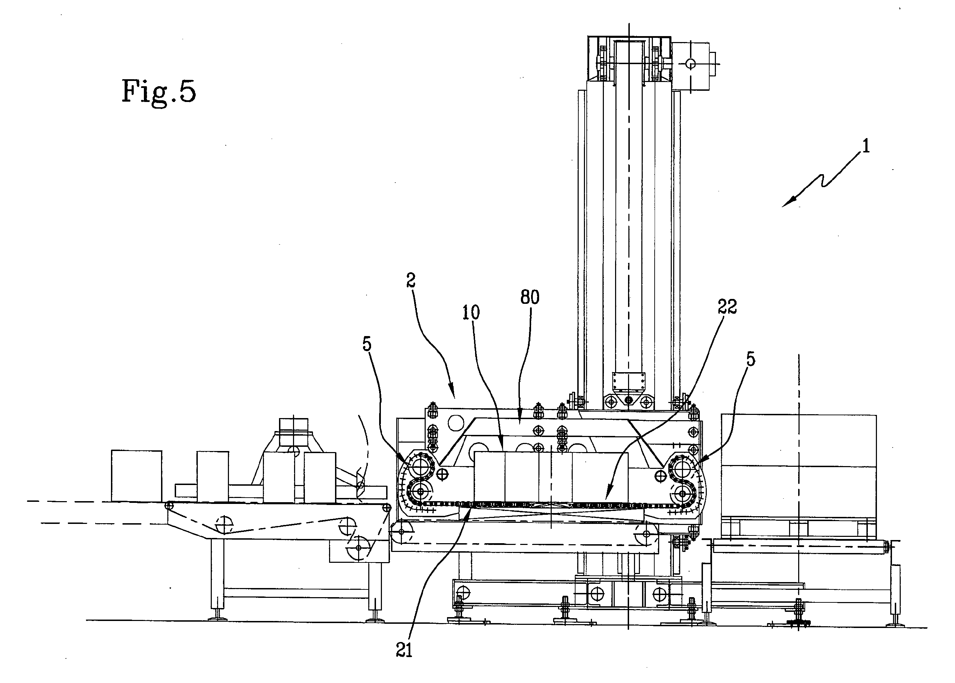

The step of inserting at least a first and a second arm 21, 22 below the predetermined layer 10 comprises a substep of reciprocally nearing a first end 210 of the first arm 21 and a first end 220 of the second arm 22 (see figure 5).

The method advantageously comprises the first and the second arm 21, 22 stretching such as to occlude a lower outlet 9 of the pickup head 2 after the predetermined layer 10 of packs has been positioned internally of the pickup head 2. The method then envisages inserting the predetermined layer 10 internally of a housing compartment 80 of the head 2, said step being carried out by moving the head 2.

The step of inserting the first and the second arm 21, 22 below the predetermined layer 10 is a step of active insertion in which a part of the first arm element 21 and a part of the second arm element 22 wedge between the layer 10 and said feeding means 33. In other words, the first and the second arm 21, 22 do not passively await the arrival of the layer 10 but are inserted below the layer 10 already positioned and raise it.

At least a part of the first and the second arm 21, 22 is advantageously inserted in a space interposed between the feeding means 33 and the predetermined layer 10; said space being advantageously a groove interposed between two parts of the supporting means 32. The step of nearing an end of the first arm 21 and an end of the second arm 22 comprises a substep of inserting at least a part of the first and the second arm 21, 22 between the cross-ties 320. In particular, at least a part of the first and second arm 21, 22 inserts in a plurality of grooves generated by a lowering of the feeding means 33 below the predetermined layer 10. The first and the second arm 21, 22 are advantageously moved at the same time. During the step of inserting the first and the second arm 21, 22 below the predetermined layer 10 the first and second arm 21, 22 preferably remain symmetrical with respect to an intermediate plane.

The step of reciprocally nearing a first end 210 of the first arm 21 and a first end 220 of the second arm 22 includes reciprocally nearing a first and a second fitting 211, 221. The first and second fitting 211, 221 are part respectively of the first and second arm 21, 22. The first and the second fitting 211, 221 are respectively positioned at the first end 210 of the first arm 21 and the first end 220 of the second arm 22. The first and the second fitting 211, 221 consist in toothed wedge-shaped bars. The wedge-shaped conformation is very important because the geometry thereof facilitates insertion of the first and the second arm 21, 22 below the predetermined layer of packs.

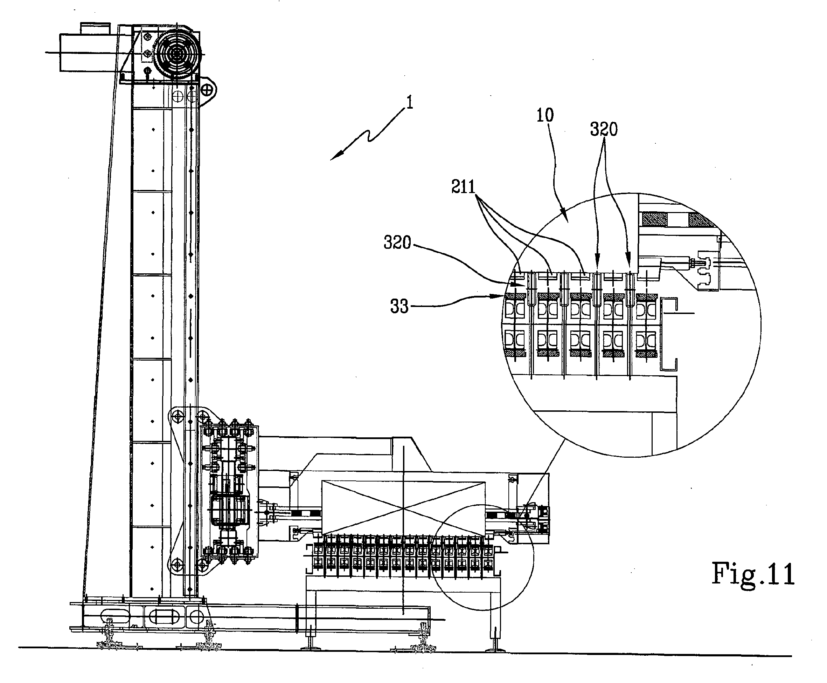

Each toothed wedge-shaped bar 211, 221 is conformed such as to interfere and co-penetrate the cross-ties 320 of the supporting means 32 in such a way as to enable raising the predetermined layer 10. This is clearly illustrated in figure 11. In other words, the two toothed wedge-shaped bars 211, 221 and the cross-ties 320 co-penetrate reciprocally as with rake-type planes.

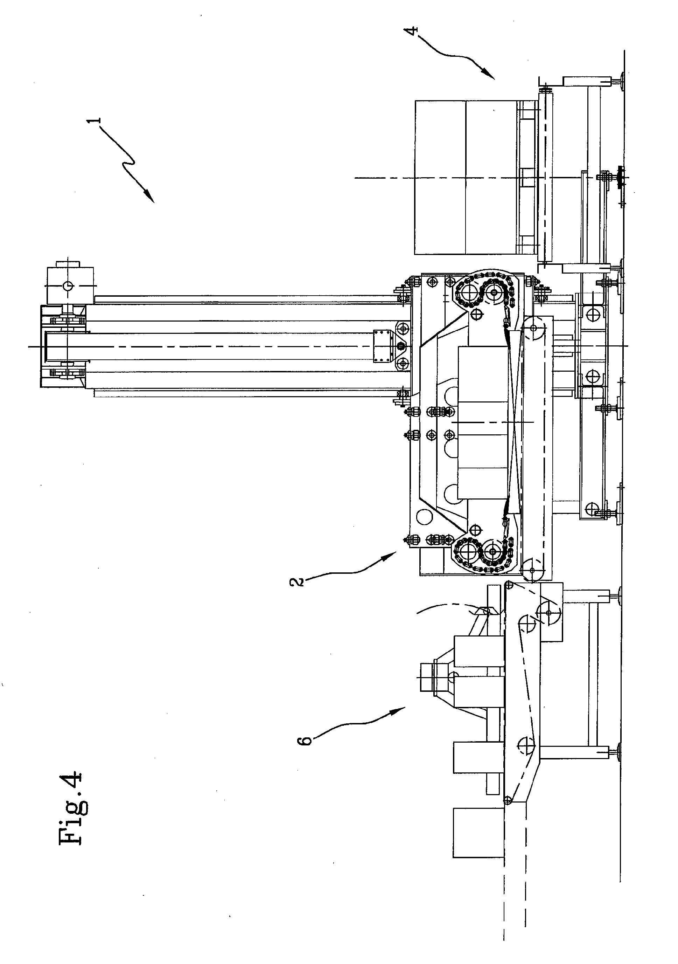

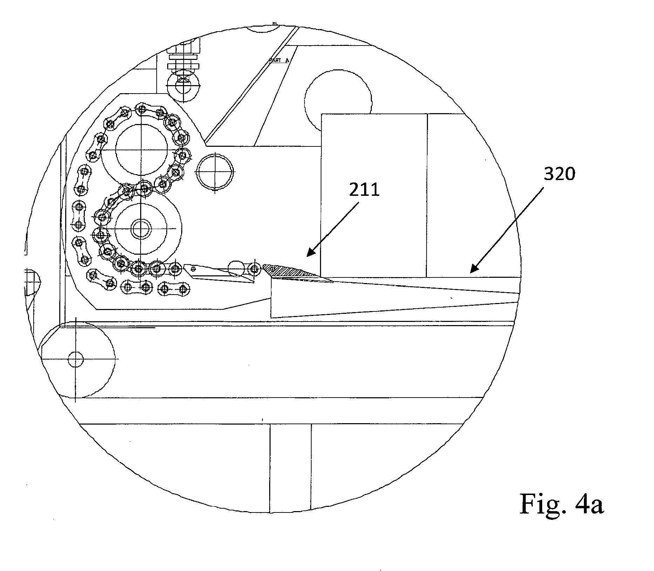

The step of nearing the first and the second fitting 211, 221 comprises steps of:
- placing the first and second fitting 211, 221 in contact with the predetermined layer of packs 10;
- raising the predetermined layer of packs 10 on the first and the second fitting 211, 221 (see figure 4a).

The step of moving the predetermined layer 10 along a feed plane 30 advantageously comprises moving the predetermined layer 10 of packs parallel to an imaginary direction 7 which conjoins the first and the second fitting 211, 221 (at least when the pickup head 2 is at the pickup station 3). The first or the second fitting 211, 221 comprises a plurality of teeth which insert between the cross-ties 320, inserting below the predetermined layer 10. The step of inserting at least a first and a second arm 21, 22 below the predetermined layer 10 includes positioning a part of the first and the second fitting 211, 221 at the level of (or preferably below) the supporting plane 31 (with the first and the second arm 21, 22 rolled into a smaller-volume configuration).

The step of nearing a first end 210 of the first arm 21 and a first end 220 of the second arm 22 comprises a substep of inserting a tip of the first and the second fitting 211, 221 between the feeding means 33 and said predetermined layer 10 (advantageously the tip of the first and the second fitting 211, 221 is inserted below the supporting plane 31 in a space interposed between the feeding means 33 and the predetermined layer 10; said space being advantageously a groove interposed between two parts of the supporting means 33). The step of nearing a first end 210 of the first arm 21 and a first end 220 of the second arm 22 comprises the substep of inserting at least a part of the first and the second fitting 211, 221 between the cross-ties 320 in order to raise the predetermined layer 10. In particular at least a part of the first and the second fitting 211, 221, over a part of the nearing step of the ends 210, 220 of the first arm 21 and the second arm 22, insert in a plurality of spaces generated from the lowering of the feeding means 33.

The first and the second arm 21, 22 are preferably elements that can be rolled up.

The step of reciprocally nearing the first end 210 of the first arm 21 and the first end 220 of the second arm 22 comprises unrolling said arms 21, 22 or rollable elements (also known as "roller-shutters") for supporting the predetermined layer 10 of packs. The step of unrolling the first and the second rollable element 21, 22 includes moving them along guides fashioned in the head 2. The first and the second rollable elements 21, 22 comprise a plurality of modular element having a prevalently longitudinal development. The modular elements are flanked and are constrained to one another. The flexibility and rollability of the first and the second rollable elements 21, 22 is due to the fact that the elements are not defined by a single piece, but comprise the above-indicated modular elements which enable small relative displacements. The first rollable element 21 enmeshes with rotating rolling/unrolling elements located in the head 2. This can be repeated in a like way for the second rollable element 22. The step of unrolling the shutter/rollable element includes setting the rotating rolling/unrolling elements in rotation.

In an alternative embodiment (not illustrated) the first and the second arm 21, 22 consist in planes able to translate such as to wedge below the layer 10.

The step of reciprocally nearing the first end 210 of the first arm 21 and the first end 220 of the second arm 22 thus includes translation of said planes 21, 22 for supporting the predetermined layer 10 of packs. In this embodiment too the two planes 21, 22 comprise a plurality of flanked modular elements having a prevalent longitudinal development and constrained to one another.

After the step of inserting at least a first and a second rollable element 21, 22 below the predetermined layer 10 the method includes blocking the packs of the predetermined layer 10 using perimeter centring elements (which advantageously bring the predetermined layer 10 to the definitive size).

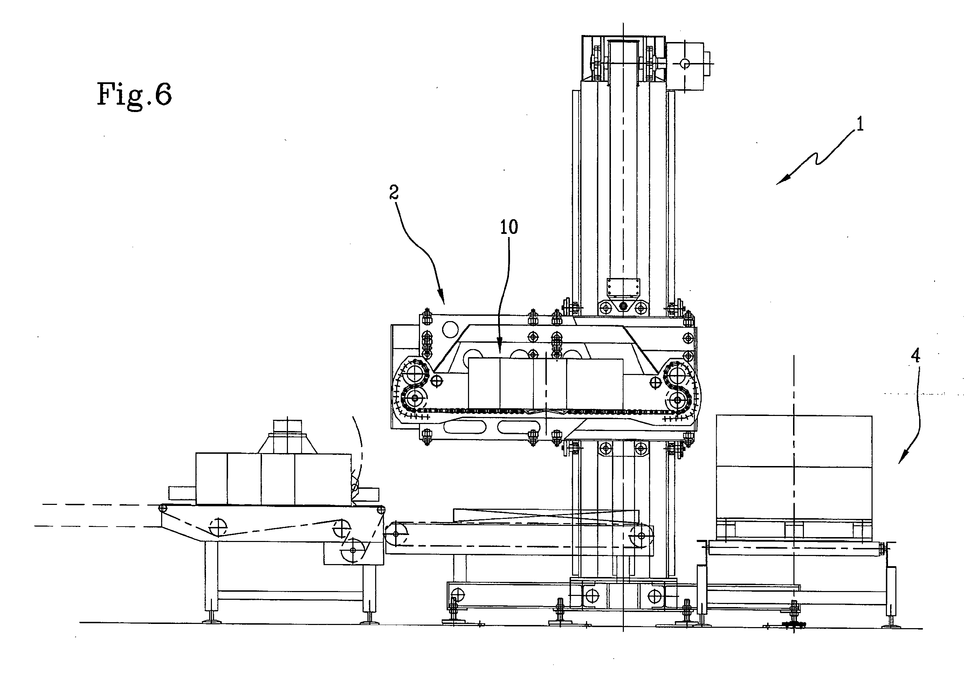

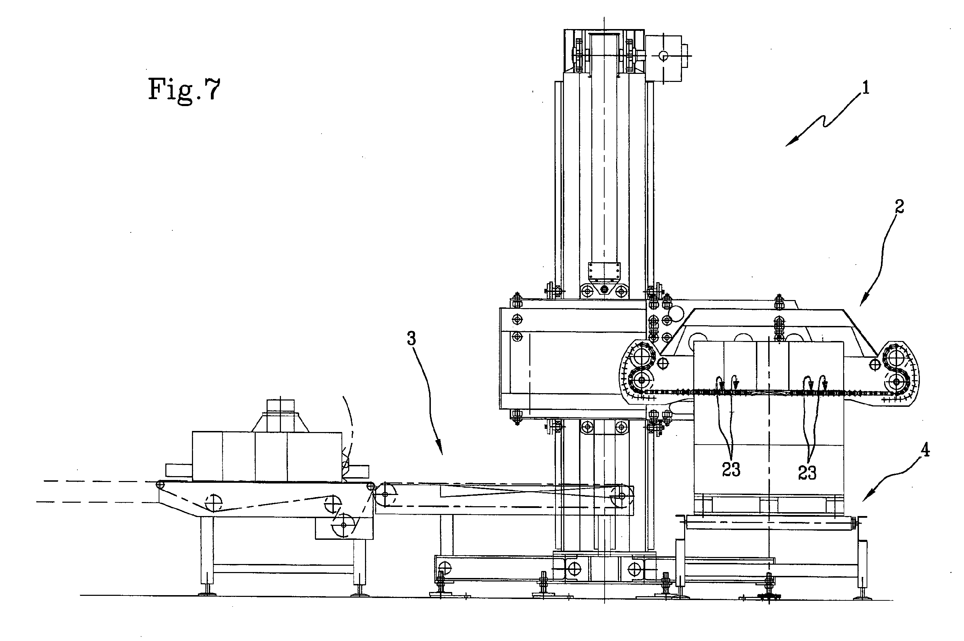

The method further comprises a step of displacing the pickup head 2 and the predetermined layer 10 up to in proximity of an unloading station 4 (see figures 6 and 7). In particular the head 2 is brought to above the unloading station 4.

In the unloading station 4, the various layers are positioned one above another in identical steps to the steps described herein above. The layer which is lowest of all rests directly on a pallet.

The step of displacing the pickup head 2 advantageously comprises raising the pickup head 2. The step of displacing the pickup head 2 includes, after the raising thereof, horizontally translating the head 2 (see the solution illustrated in figure 7, but in an alternative embodiment that is not preferred a rotation might be used). In fact the step of raising enables preventing the pickup head 2 from impacting against the pallet or against layers of packs already arranged on the pallet. Further, a minimum raising also enables preventing the dragging of the predetermined layer 10 on the support means 32.

During the step of displacing the head 2 from the pickup station 3 to the unloading station 4, the perimeter centring elements carry out a blocking action on the predetermined layer 10 of packs. During the step of transferring the head 2 from the pickup station 3 to the unloading station 4 the first and the second rollable elements 21, 22 are in an extended position.

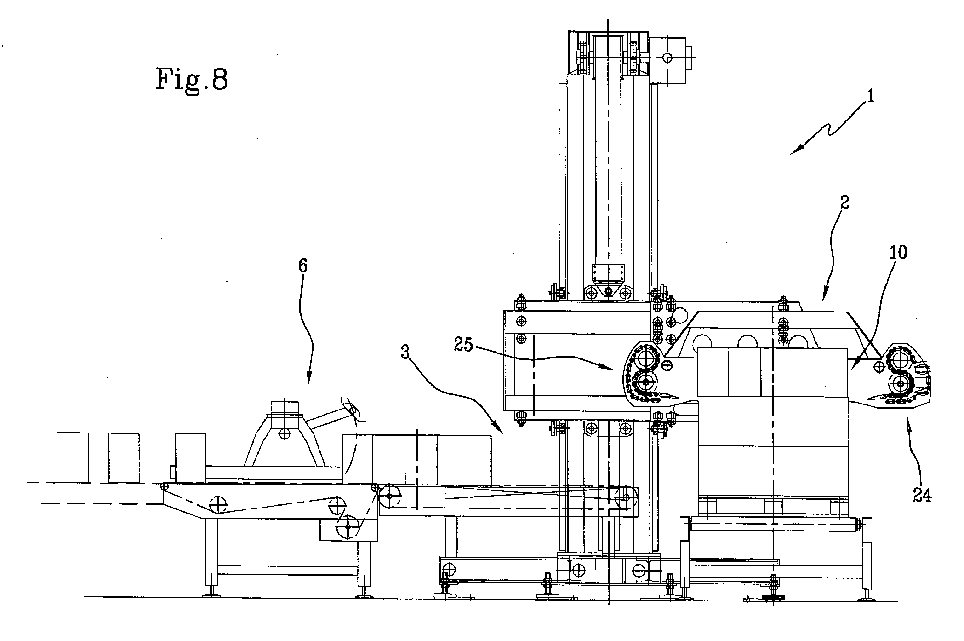

The method further includes the step of releasing the predetermined layer 10 (see figure 8).

The step of releasing the predetermined layer 10 comprises loosening the grip of the perimeter centring elements located in the head 2.

The step of releasing the predetermined layer 10 includes distancing the first end 210 of the first rollable element 21 and the first end 220 of the second rollable element 22.

The distancing of the first end 210 of the first rollable element 21 from the first end 220 of the second rollable element 22 enables the fall of the predetermined layer 10 (typically by force of gravity).

The step of releasing the predetermined layer 10 comprises a step of reciprocally distancing the first end 210 of the first rollable element 21 and the first end 220 of the second rollable element 22 by sliding the predetermined layer 10 on rolling means 23 fashioned along the first and the second rollable element 21, 22. The rolling means 23 involve at least a portion of the first and second rollable element 21, 22 destined to come into contact with the predetermined layer 10 of packs. In this way, during the step of releasing the predetermined layer 10 (or another layer) there is a rolling friction and not a grazing friction between the predetermined layer 10 and the first and the second rollable element 21, 22. This limits the risk of breakage to the outer cladding of the predetermined layer 10 or a misalignment of the predetermined layer 10 with respect to the unloading station 4.

The method comprises a step of rolling-up the first and second rollable element 21, 22. This occurs during the step of releasing the predetermined layer 10 (or any other layer). During the step of rolling up the first and the second rollable element 21, 22, the rollable elements 21, 22 retract respectively into a first and a second housing 25, 24 (see figure 8). The first and the second housing 25, 24 advantageously house the rotating rolling/unrolling elements.

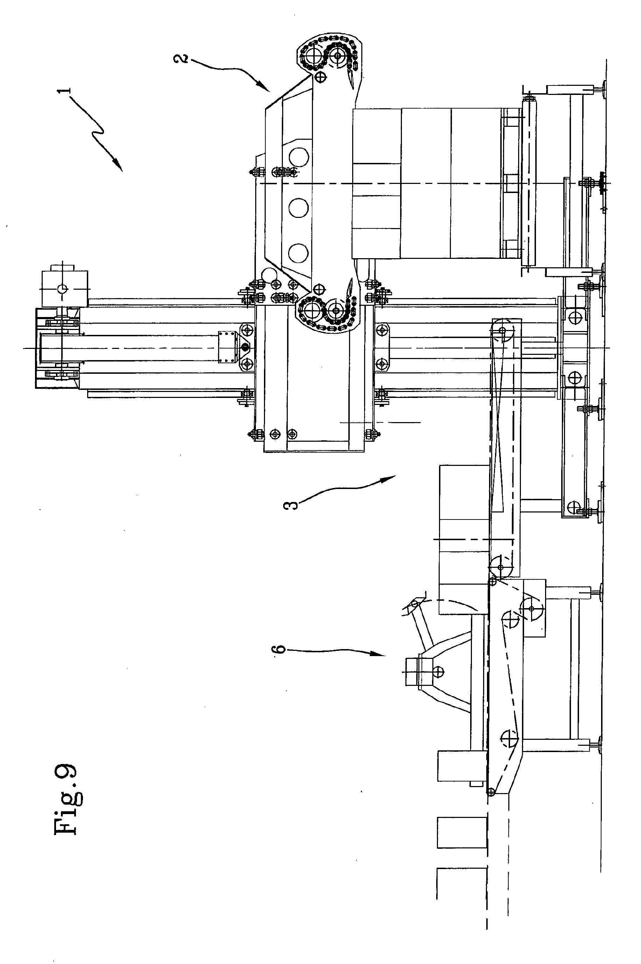

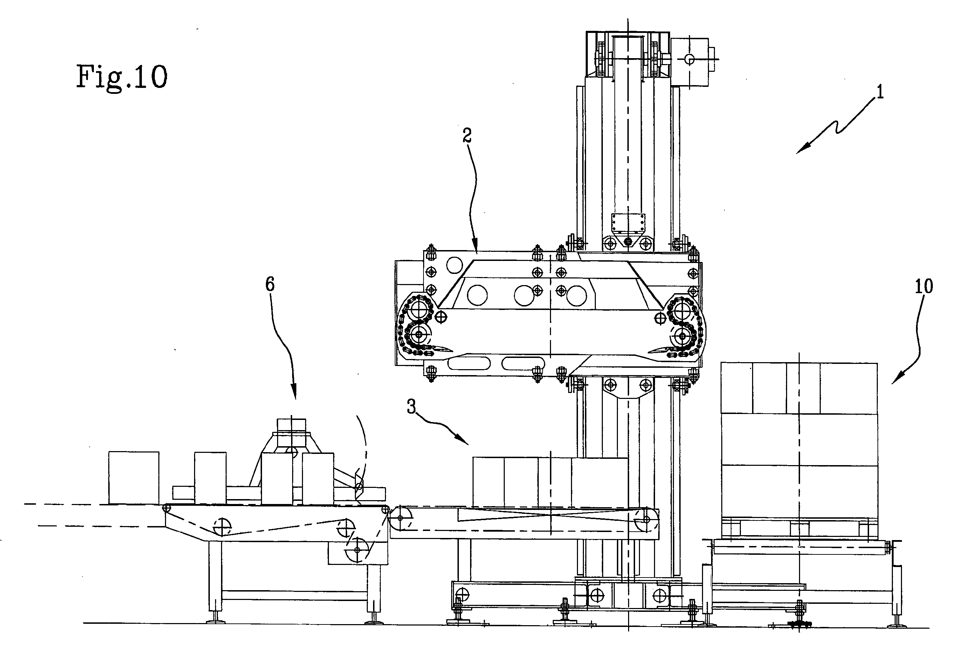

The method advantageously further comprises a step of repositioning the pickup head 2 in proximity of the pickup station 3 after the step of releasing the predetermined layer 10. The step of repositioning the pickup head 2 in proximity of the pickup station 3 comprises raising the head 2 such as to move above the volume of the just-deposited layer (see figure 9) and then reposition it at the pickup station 3 (see figure 10). During at least the final part of the step of repositioning the pickup head 2 in proximity of the pickup station 3 the perimeter centring elements are advantageously open (i.e. disengaged with respect to the volume of the layer of packs which they are about to pick up).

The above-described cycle can then be repeated, with a further layer of packs.

Before the step of repositioning the pickup head 2 in proximity of the pickup station 3 is completed, the method comprises the step of positioning a new layer of packs in the pickup station 3 and in particular comprises steps of:
- positioning the supporting plane 31 above the feeding plane 30;
- transferring a further layer of packs from the feeding means 33 to the supporting plane 31.

By at least partly contemporaneously moving said further layer of packs and the pickup head 2, the cycle time is reduced.

Also object of the present invention is a device 1 for stacking layers of packs comprising:
i) a pickup station 3 of a layer of packs
ii) a pickup head 2 of the layer of packs.

The pickup head 2 comprises:
- a first arm 21 which comprises, at a first end 210, a first fitting 211 destined to wedge below a layer of packs;
- a second arm 22 which comprises, at a first end 220, a second fitting 221 destined to wedge below a layer of packs. The first and the second arm 21, 22 are preferably rollable (in a roller-shutter fashion, as indicated herein above).

The second fitting 221, at least in a first operating configuration, faces towards the first fitting 211. More in general, the first and the second rollable elements 21, 22 face one another.

The pickup head 2 further comprises motorised nearing/distancing means 5 of the first and second fitting 211, 221. The first rollable element 21 and the second rollable element 22 define pickup means that at least partly insert below the layer of packs.

The device 1 comprises positioning means 8, 5 of the layer of packs in a housing 80 of the head 2. The positioning means 8, 5 comprise:
- means for moving the head 2;
- said motorised means 5 for nearing/distancing the first and the second fitting 211, 221 (such as to occlude an outlet opening 9 of the layer of packs from said housing 80).

The pickup station 3 advantageously comprises:
- advancing means 33 of a layer of packs, which advancing means 33 typically comprise a rotating belt or motorized rollers; the advancing means 33 define an imaginary advancing plane 30;
- supporting means 32 of a layer of packs; the supporting means 32 define an imaginary supporting plane 31;
- raising/lowering means relating to the advancing means 33 with respect to the supporting means 32. The advancing means 33 (for example one or more belts) are at least partly interposed or interposable to the supporting means 32 (for example cross-ties 320) or vice versa.

The first and the second rollable element 21, 22 comprise rolling means 23 which facilitate unloading of the layer of packs supported thereby.

The device 1 of the present invention implements the method described herein above. The device 1 of the present invention thus comprises one or more of the components and technical characteristics already described with reference to the method.

The invention as it is conceived enables many advantages to be gained.

In particular it enables accelerating the production cycle because of the elimination of down times. Further it enables realizing an extremely compact structure due to the use of rollable elements (roller shutters).

The invention as it conceived is susceptible to numerous modifications and variants, the scope of the invention being defined by the appended claims. Further, all the details can be replaced by other technically-equivalent elements. In practice, all the materials used, as well as the dimensions, may be any according to requirements.

## Claims

1. Method of stacking layers of packs by means of a pickup head (2), said method comprising the following steps:
- positioning a predetermined layer (10) of packs in a pickup station (3), said step comprising a substep of moving the predetermined layer (10) along an imaginary feeding plane (30) defined by motorized feeding means (33) fashioned in the pickup station (3) and a substep of positioning the feeding plane (30) below an imaginary supporting plane (31) defined by supporting means (32) and fashioned in the pickup station (3), thus determining the transfer of the predetermined layer (10) from the feeding means (33) to the supporting means (32);
- inserting at least a first and a second arm (21, 22) of the pickup head (2) below the predetermined layer (10), reciprocally nearing a first end (210) of the first arm (21) and a second end (220) of the second arm (22);
- displacing the pickup head (2) and the predetermined layer (10) up to in proximity of an unloading station (4);
- releasing the predetermined layer (10);
wherein the step of positioning the feed plane (30) below the supporting plane (31) comprises a step of lowering the feeding means (33) and/or a step of raising the supporting means (32) so that at least a groove is generated below the predetermined layer (10) of packs, in which groove a part of the pickup head (2) can be inserted;
**characterized in that**:
- the step of inserting said first and said second arm (21, 22) below the predetermined layer (10) is a step of active insertion in which a part of the first arm (21) and a part of the second arm (22) become wedged between the layer (10) and said feeding means (33);
- the step of reciprocally nearing a first end (210) of the first arm (21) and a first end (220) of the second arm (22) comprises reciprocally nearing a first and a second fitting (211, 221) consisting in toothed wedge-shaped bars positioned respectively at the first end (210) of the first arm (21) and the first end (220) of the second arm (22), the step of nearing the first and the second fittings (211, 221) towards one another comprising the steps of:
placing the first and the second fitting (211, 221) in contact with the predetermined layer (10) of packs;
lifting the predetermined layer (10) of packs onto the first and the second fitting (211, 221).

2. Method according to claim 1, **characterised in that** it comprises a step of repositioning the pickup head (2) in proximity of the pickup station (3) after the step of releasing the predetermined layer (10);
before the step of repositioning the pickup head (2) in proximity of the pickup station (3) is completed, the method comprises a step of transferring a next layer of packs from the feeding means (33) to the supporting plane (31).

3. Method according to claim 1, **characterised in that** the step of releasing the predetermined layer (10) of packs comprises a step of reciprocally distancing the first end (210) of the first arm (21) and the first end (220) of the second arm (22) by sliding the predetermined layer (10) on underlying rolling means (23) fashioned along the first and the second arm (21, 22).

4. Method according to claim 1 or 3, **characterised in that** said first and said second arm (21, 22) are elements that can be rolled up so that the step of nearing the first end (210) of the first arm (21) and the first end (220) of the second arm (22) comprises unrolling said arms (21, 22) or rollable elements in such a way that the arms (21, 22) wedge below said predetermined layer (10) of packs.

5. Method according to claim 1 or 3 or 4, **characterised in that** the step of moving the predetermined layer (10) along a feeding plane (30) comprises moving the predetermined layer (10) parallel to an imaginary direction (7) which conjoins the first and the second fitting (211, 221).

6. Device for stacking layers of packs, comprising:
i) a pickup station (3) of a layer of packs, said pickup station (3) comprising feeding means (33) of a layer of packs, which define a feed plane (30) and comprise a rotating belt or motorized rollers, and supporting means (32) of a layer of packs, which define a supporting plane (31) formed by a plurality of flanked cross-ties (320) ;
ii) a pickup head (2) of the layer of packs, said pickup head (2) comprising:
- a first arm (21) comprising at a first end (210) thereof a first fitting (211);
- a second arm (22) comprising at a first end (220) thereof a second fitting (221), said second fitting (221), at least in a first operating configuration, facing the first fitting (211);
- motorized means (5) for reciprocally nearing/distancing the first and the second fitting (211, 221);
iii) positioning means (8, 5) of the layer of packs in a housing (80) of the head (2); said positioning means (8, 5) comprising movement means (8) of the head (2) and said motorised reciprocal nearing/distancing means (5) of the first and the second fitting (211, 221) such as to occlude an outlet opening (9) of the layer from said housing (80), wherein the pickup station (3) further comprises raising/lowering means of the feeding means (33) with respect to the supporting means (32),
**characterised in that** said first and second fitting (211, 221) consist in toothed wedge-shaped bars, each toothed wedge-shaped bar (211, 221) being conformed in such a way as to interfere and copenetrate with respect to said cross-ties (320) such as to enable raising of the predetermined layer (10).

7. Device according to claim 6, **characterised in that** the first and the second arm (21, 22) comprise rolling means (23) which facilitate unloading of the layer of packs supported thereby.

## Patentansprüche

1. Verfahren zum Stapeln von Paketschichten mittels eines Aufnahmekopfs (2), wobei dieses Verfahren folgende Schritte umfasst:
- Positionieren einer vorgegebenen Schicht (10) von Paketen auf einer Aufnahmestation (3), wobei dieser Schritt einen Unterschritt zum Bewegen der vorgegebenen Schicht (10) entlang einer imaginären Zuführungsebene (30) umfasst, definiert von motorbetriebenen Zuführungsmitteln (33), die in der Aufnahmestation (3) ausgestaltet sind, und einen Unterschritt zum Positionieren der Zuführungsebene (30) unter einer imaginären Auflageebene (31), definiert durch Auflagemittel (32) und ausgestaltet in der Aufnahmestation (3), wodurch die Übergabe der vorgegebenen Schicht (10) von den Zuführungsmitteln (33) an die Auflagemittel (32) bewirkt wird;
- Einführen von mindestens einem ersten und einem zweiten Arm (21, 22) des Aufnahmekopfs (2) unter die vorgegebene Schicht (10), wobei sich jeweils ein erstes Ende (210) des ersten Arms (21) und ein zweites Ende (220) des zweiten Arms (22) gegenseitig aneinander annähern;
- Verfahren des Aufnahmekopfs (2) und der vorgegebenen Schicht (10) nach oben in der Nähe einer Abladestation (4);
- Freigeben der vorgegebenen Schicht (10);
wobei der Schritt zum Positionieren der Zuführungsebene (30) unter der Auflageebene (31) einen Schritt zum Senken der Zuführungsmittel (33) und/oder einen Schritt zum Heben der Zuführungsmittel (32) umfasst, sodass mindestens ein Spalt unter der vorgegebenen Schicht (10) von Paketen erzeugt wird, wobei in diesen Spalt ein Teil des Aufnahmekopfs (2) eingesetzt werden kann;
**dadurch gekennzeichnet, dass**:
- es sich beim Schritt zum Einführen des ersten und des zweiten Arms (21, 22) unter die vorgegebene Schicht (10) um einen Schritt der aktiven Einführung handelt, bei dem ein Teil des ersten Arms (21) und ein Teil des zweiten Arms (22) zwischen der Schicht (10) und den Zuführungsmitteln (33) verkeilt werden;
- der Schritt des gegenseitigen Annäherns eines ersten Endes (210) des ersten Arms (21) und eines ersten Endes (220) des zweiten Arms (22) das gegenseitige Annähern einer ersten und einer zweiten Befestigung (211, 221) umfasst, bestehend aus keilförmigen Zahnstangen, positioniert jeweils am ersten Ende (210) des ersten Arms (21) und am zweiten Ende (220) des zweiten Arms (22), wobei der Schritt des Annäherns der ersten und der zweiten Befestigung (211, 221) aneinander folgende Schritte umfasst:
Platzieren der ersten und der zweiten Befestigung (211, 221) in Kontakt mit der vorgegebenen Schicht (10) von Paketen;
Heben der vorgegebenen Schicht (10) von Paketen auf die erste und die zweite Befestigung (211, 221).

2. Verfahren nach Anspruch 1, **dadurch gekennzeichnet, dass** es einen Schritt zum erneuten Positionieren des Aufnahmekopfs (2) in der Nähe der Aufnahmestation (3) nach dem Schritt des Freigebens der vorgegebenen Schicht (10) umfasst.
Bevor der Schritt zum erneuten Positionieren des Aufnahmekopfs (2) in der Nähe der Aufnahmestation (3) abgeschlossen ist, umfasst das Verfahren einen Schritt zum Übergeben einer nächsten Paketschicht von den Zuführungsmitteln (33) an die Auflageebene (31).

3. Verfahren nach Anspruch 1, **dadurch gekennzeichnet, dass** der Schritt zum Freigeben der vorgegebenen Schicht (10) von Paketen einen Schritt des gegenseitigen Entfernens des ersten Endes (210) des ersten Arms (21) und des ersten Endes (220) des zweiten Arms (22) umfasst, indem die vorgegebene Schicht (10) auf darunter befindlichen Rollmitteln (23) verschoben wird, die entlang des ersten und des zweiten Arms (21, 22) ausgestaltet sind.

4. Verfahren nach Anspruch 1 oder 3, **dadurch gekennzeichnet, dass** es sich beim ersten und beim zweiten Arm (21, 22) um Elemente handelt, die aufgerollt werden können, sodass der Schritt des Annäherns des ersten Endes (210) des ersten Arms (21) und des ersten Endes (220) des zweiten Arms (22) das Abrollen dieser Arme (21, 22) oder rollbaren Elemente umfasst, sodass die Arme (21, 22) unter der vorgegebenen Schicht (10) von Paketen verkeilt werden.

5. Verfahren nach Anspruch 1 oder 3 oder 4, **dadurch gekennzeichnet, dass** der Schritt des Bewegens der vorgegebenen Schicht (10) entlang einer Zuführungsebene (30) das Bewegen der vorgegebenen Schicht (10) parallel zu einer imaginären Richtung (7) umfasst, die die erste und die zweite Befestigung (211, 221) verbindet.

6. Vorrichtung zum Stapeln von Paketschichten, umfassend:
i) eine Aufnahmestation (3) für eine Paketschicht, wobei diese Aufnahmestation (3) Zuführungsmittel (33) für eine Paketschicht umfasst, die eine Zuführungsebene (30) definieren und ein rotierendes Band oder motorbetriebene Walzen umfassen, sowie Auflagemittel (32) für eine Paketschicht, die eine Auflageebene (31) umfassen, gebildet aus einer Vielzahl von flankierten Streben (320);
ii) einen Aufnahmekopf (2) für die Paketschicht, wobei der Aufnahmekopf (2) Folgendes umfasst:
- einen ersten Arm (21), umfassend an einem ersten Ende (210) eine erste Befestigung (211);
- einen zweiten Arm (22), umfassend an einem ersten Ende (220) eine zweite Befestigung (221), wobei die zweite Befestigung (221) mindestens eine erste Betriebskonfiguration aufweist, der ersten Befestigung (211) zugewandt;
- motorbetriebene Mittel (5) für das gegenseitige Annähern/Entfernen der ersten und der zweiten Befestigung (211, 221);
iii) Positionierungsmittel (8, 5) für die Paketschicht in einem Gehäuse (80) des Kopfs (2), wobei diese Positionierungsmittel (8, 5) Bewegungsmittel (8) für den Kopf (2) und die motorbetriebenen Mittel zum Annähern/Entfernen (5) der ersten und der zweiten Befestigung (211, 221) umfassen, sodass eine Auslassöffnung (9) für die Schicht aus dem Gehäuse (80) verschlossen wird;
wobei die Aufnahmestation (3) zudem umfasst
Mittel zum Heben/Senken der Zuführungsmittel (33) im Vergleich zu den Auflagemitteln (32),
**dadurch gekennzeichnet, dass** die erste und die zweite Befestigung (211, 221) aus keilförmigen Zahnstangen bestehen, wobei jede keilförmige Zahnstange (211, 221) so ausgebildet ist, dass sie mit den Streben (320) interferiert und es zu einem gegenseitigen Eingreifen kommt, sodass das Heben der vorgegebenen Schicht (10) ermöglicht wird.

7. Vorrichtung nach Anspruch 6, **dadurch gekennzeichnet, dass** der erste und der zweite Arm (21, 22) Rollmittel (23) umfassen, die das Abladen der durch sie gestützten Paketschicht erleichtern.

## Revendications

1. Procédé d'empilage de couches de paquets par le biais d'une tête de préhension (2), ledit procédé comprenant les étapes suivantes :
- positionner une couche prédéterminée (10) de paquets dans un poste de prélèvement (3), ladite étape comprenant une sous étape de déplacement de la couche prédéterminée (10) le long d'un plan d'acheminement imaginaire (30) défini par des moyens d'acheminement motorisés (33) établis dans le poste de prélèvement (3) et une sous étape de positionnement du plan d'acheminement (30) en dessous d'un plan de support imaginaire (31) défini par des moyens de support (32) et établis dans le poste de prélèvement (3), déterminant ainsi le transfert de la couche prédéterminée (10) des moyens d'acheminement (33) aux moyens de support (32) ;
- insérer au moins un premier et un second bras (21, 22) de la tête de préhension (2) en dessous de la couche prédéterminée (10) à proximité réciproquement d'une première extrémité (210) du premier bras (21) et d'une seconde extrémité (220) du second bras (22) ;
- déplacer la tête de préhension (2) et la couche prédéterminée (10) à proximité immédiate d'un poste de déchargement (4) ;
- libérer la couche prédéterminée (10) ;
dans lequel l'étape de positionnement du plan d'acheminement (30) en dessous du plan de support (31) comprend une étape consistant à abaisser les moyens d'acheminement (33) et/ou une étape consistant à relever les moyens de support (32) de manière à ce que soit créée une rainure en dessous de la couche prédéterminée (10) de paquets, une partie de la tête de préhension (2) pouvant être insérée dans ladite rainure ;
**caractérisé en ce que** :
- l'étape d'insertion dudit premier et dudit second bras (21, 22) en dessous de la couche prédéterminée (10) est une étape d'insertion active dans laquelle une partie du premier bras (21) et une partie du second bras (22) peuvent se caler entre la couche (10) et lesdits moyens d'acheminement (33) ;
- l'étape de rapprochement réciproque d'une première extrémité (210) du premier bras (21) et d'une première extrémité (220) du second bras (22) comprend le rapprochement réciproque d'un premier et d'un second raccord (211, 221) consistant en des barres dentées en forme de coin positionnées respectivement à la première extrémité (210) du premier bras (21) et à la première extrémité (220) du second bras (22), l'étape de rapprochement des premier et second raccords (211, 221) l'un vers l'autre comprenant les étapes de :
placer le premier et le second raccord (211, 221) en contact avec la couche prédéterminée (10) de paquets ;
soulever la couche prédéterminée (10) de paquets sur le premier et le second raccord (211, 221).

2. Procédé selon la revendication 1, **caractérisé en ce qu'**il comprend une étape de repositionnement de la tête de préhension (2) à proximité du poste de prélèvement (3) après l'étape de libération de la couche prédéterminée (10) ;
avant que l'étape de repositionnement de la tête de préhension (2) à proximité du poste de prélèvement (3) ne soit terminée, le procédé comprend une étape de
transfert d'une couche suivante de paquets des moyens d'acheminement (33) au plan de support (31).

3. Procédé selon la revendication 1, **caractérisé en ce que** l'étape de libération de la couche prédéterminée (10) de paquets comprend une étape consistant à éloigner réciproquement la première extrémité (210) du premier bras (21) et la première extrémité (220) du second bras (22) en faisant coulisser la couche prédéterminée (10) sur des moyens de roulement sous-jacents (23) établis le long du premier et du second bras (21, 22).

4. Procédé selon les revendications 1 ou 3, **caractérisé en ce que** ledit premier et ledit second bras (21, 22) sont des éléments pouvant être enroulés de sorte que l'étape de rapprochement de la première extrémité (210) du premier bras (21) et de la première extrémité (220) du second bras (22) comprend le déroulage desdits bras (21, 22) ou des éléments enroulables de sorte que les bras (21, 22) se calent en dessous de ladite couche prédéterminée (10) de paquets.

5. Procédé selon les revendications 1 ou 3 ou 4, **caractérisé en ce que** l'étape de déplacement de la couche prédéterminée (10) le long d'un plan d'acheminement (30) comprend le déplacement de la couche prédéterminée (10) parallèlement à une direction imaginaire (7) qui unit le premier et le second raccord (211, 221).

6. Dispositif d'empilage de couches de paquets, comprenant :
i) un poste de prélèvement (3) d'une couche de paquets, ledit poste de prélèvement (3) comprenant des moyens d'acheminement (33) d'une couche de paquets définissant un plan d'acheminement (30) et comprend une courroie rotative ou des rouleaux motorisés ainsi que des moyens de support (32) d'une couche de paquets définissant un plan de support (31) composé d'une pluralité de traverses placées côte à côte (320) ;
ii) une tête de préhension (2) de la couche de paquets, ladite tête de préhension (2) comprenant :
- un premier bras (21) comprenant à une première extrémité (210) un premier raccord (211) ;
- un second bras (22) comprenant à une première extrémité (220) un second raccord (221), ledit second raccord (221), au moins dans une première configuration fonctionnelle, faisant face au premier raccord (211) ;
- des moyens motorisés (5) pour réciproquement rapprocher/éloigner le premier et le second raccord (211, 221) ;
iii) des moyens de positionnement (8, 5) de la couche de paquets dans un logement (80) de la tête (2) ; lesdits moyens de positionnement (8, 5) comprenant des moyens de déplacement (8) de la tête (2) et desdits moyens de rapprochement/d'éloignement réciproques motorisés (5) du premier et du second raccord (211, 221) de sorte à fermer une ouverture de sortie (9) de la couche à partir dudit logement (80),
dans lequel le poste de prélèvement (3) comprend de plus des moyens destinés à relever/abaisser les moyens d'acheminement (33) par rapport au moyens de support (32),
**caractérisé en ce que** lesdits premier et second raccords (211, 221) consistent en des barres dentées en forme de coin, chaque barre dentée en forme de coin (211, 221) ayant une forme pouvant interférer et s'imbriquer par rapport auxdites traverses (320) de manière à activer le relèvement de la couche prédéterminée (10).

7. Dispositif selon la revendication 6, **caractérisé en ce que** le premier et le second bras (21, 22) comprennent des moyens de roulement (23) facilitant le déchargement de la couche de paquets qu'ils supportent.
